# EUROPEAN PATENT SPECIFICATION

(11) **EP 1 449 334 B1**
(45) Date of publication and mention of the grant of the patent: **05.01.2011**
(21) Application number: 02786332.3
(22) Date of filing: 15.11.2002
(51) Int. Cl.: H04W 28/16

(54) **Method and System of Transmitting Data**
Verfahren und System zur Übertragung von Daten
Procédé et Système pour transmettre des données

(30) Priority: 15.11.2001 SE 0103853
(43) Date of publication of application: 25.08.2004
(73) Proprietor: Telefonaktiebolaget LM Ericsson (publ), 164 83 Stockholm (SE)
(72) Inventor: SÅGFORS, Mats, FIN-02400 Kyrkslätt (FI); PEISA, Janne, FIN-02130 Espoo (FI); MEYER, Michael, 52080 Aachen (DE); LUDWIG, Reiner, 52393 Huertgenwald (DE)
(74) Representative: Kühn, Friedrich Heinrich
(86) International application number: PCT/SE2002/002088
(87) International publication number: WO 2003/043278

(56) References cited:
- EP-A2- 0 798 943
- EP-A2- 1 045 551
- WO-A-00/21231

## Description

### TECHNICAL FIELD OF THE INVENTION

The present invention relates to transmissions and retransmissions of packet data in a communications system, where the communications system uses rate switching or channel switching. Especially, it relates to transmissions of packet data in a cellular mobile radio system, particularly a Universal Mobile Telecommunications System, UMTS, or WCDMA system.

### BACKGROUND AND DESCRIPTION OF RELATED ART

Retransmission of data to or from a mobile station, MS, or user equipment, UE, is previously known. It is also known to use medium access control and radio link control layers of a UMTS protocol structure in acknowledged mode for dedicated channels and to transmit packet data using use protocols, such as TCP (Transmission Control Protocol), that controls the transmission rate, based on link quality in terms of packet loss and delay characteristics.

In acknowledged mode of UMTS, retransmissions are undertaken in case of detected transmission errors not recovered by forward error control. This is also called automatic repeat request, ARQ. With ARQ, retransmissions can be undertaken unless a transmitted message is (positively) acknowledged within a predetermined time frame, or if it is negatively acknowledged.

Within this patent application, a radio network controller, RNC, is understood as a network element including a radio resource controller. The RNC is connected to a fixed network. Node B is a logical node responsible for radio transmission/reception in one or more cells to/from a User Equipment. A base station, BS, is a physical entity representing Node B. A server device provides information accessible to other devices over a communications network such as, e.g., the Internet. A client device is a device having access to information provided by one or more devices over a communications network.

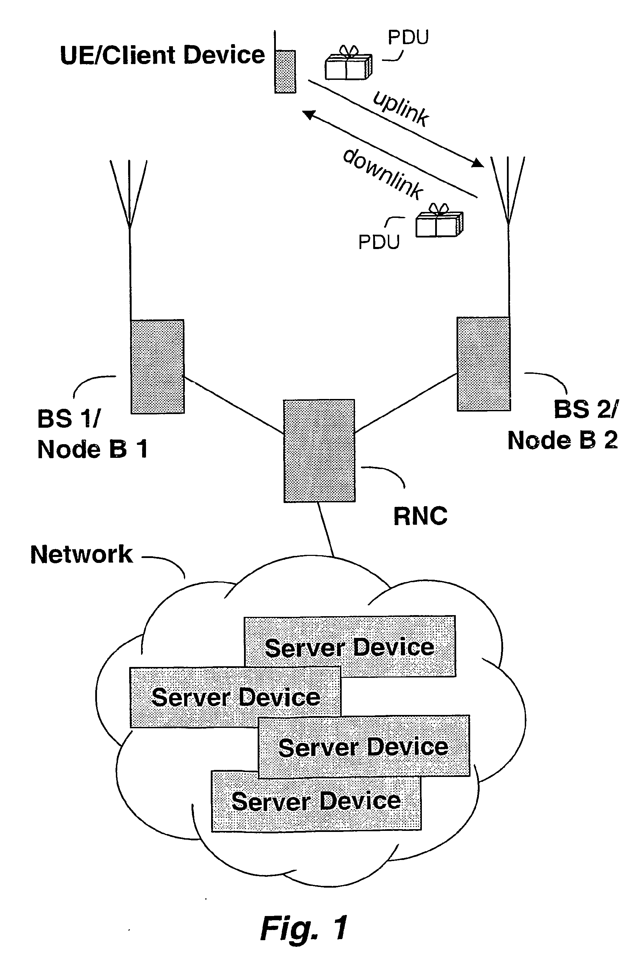

With reference to figure 1, base stations «BS 1» and «BS 2» are physical entities representing Nodes B «Node B 1» and «Node B 2» respectively. «Node B 1» and «Node B 2» terminate the air interface, called Uu interface within UMTS, between UE and respective Node B towards the radio network controller «RNC». «RNC» is connected to a fixed network «Network». The fixed network may comprise one or more Server Devices «Server Device».

Medium access control, MAC, and radio link control, RLC, is used within radio communications systems like General Packet Radio Services, GPRS, and UMTS.

The *Internet Society: Request for Comments (RFC) No. 3135, June 2001* describes proxy solutions for some explicitly mentioned systems, including systems operating with TCP for communication links being subject to small bandwidth-delay products, such as W-LANs (Wireless Local Area Networks), W-WANs (Wireless Wide Area Networks) and GSM (Global System for Mobile Communications) or links optimized with small block error rates (BLER), such as satellite links.

The Internet Society: Request for Comments (RFC) No. 2488, January 1999 and RFC No. 3135 describe some characteristics of a satellite channel,
1. propagation delays in the range of 480 ms to a few seconds,
2. data rates in the range of a few kilobits per second to multiple megabits per second,
3. asymmetric ratio of IP packet bytes for data and acknowledgements respectively and
4. very low bit error rates during clear sky conditions.

As severe weather conditions are rare, satellite links are generally optimized for clear sky conditions with very low bit error rates and (for moderate block sizes) small block error rates, in accordance with characteristic No. 4.

The Internet Society: Request for Comments (RFC) No. 2581, April 1999 describes four phases of TCP load adaptation:
1. Slow Start,
2. Congestion Avoidance,
3. Fast Retransmit and
4. Fast Recovery.

Slow Start slowly probes the network to determine the available capacity in order to avoid congestion. Slow Start is used when beginning transmission or after repairing detected lost packets. For the purpose of Slow Start TCP makes use of two variables, *cwnd* (congestion window) and rwnd (receivers advertised window). *cwnd* is a sender-side limit of the number of data packets outstanding and *rwnd* is a receiver-side limit on window size. A third variable *ssthresh* (Slow Start threshold) determines whether Slow Start or Congestion Avoidance will be used for congestion control. Slow Start is used when *cwnd* < *ssthresh* and Congestion Avoidance is used when *cwnd* > *ssthresh.* When *cwnd = ssthresh* either Slow Start or Congestion Avoidance can be used.

At the beginning of a data transfer Slow Start is used to probe the network for its conditions. For each (positively) acknowledged data packet, the sender-side increases *cwnd* until it reaches *ssthresh.*

During Congestion Avoidance *cwnd* is increased in relation to round-trip time until a packet loss is detected, which is interpreted as congestion. This is e.g. the case if a retransmission timer times out without a packet being acknowledged during the retransmission time of the packet.

When the receiver-side receives an out-of-order packet it sends a duplicate ACK, indicating which sequence number it expects. After receiving three consecutive duplicate ACKs indicating the same sequence number, TCP retransmits the indicated segment without waiting for the retransmission timer to time out. This is Fast Retransmit. Subsequent. transmissions are sent during Fast Recovery until a non-duplicate ACK is received. During Fast Retransmit and Fast Recovery *cwnd* and *ssthresh* are adjusted.

*U.S. Patent Application* US5673322 describes a split proxy system that encapsulates TCP/IP transmissions into a script transmission.

*European Patent Application* EP1109359 describes an apparatus and method for dividing a TCP connection into two connections, having congestion control in only one of the two connections.

*International Patent Application* WO0021231 relates to a system for communicating data packets over a packet switched network where a buffering network entity acts as end-receiver of data packets transmitted from a sending host.

European Patent Application EP0991242 describes a method and apparatus for caching credentials in proxy servers for wireless user agents.

European Patent Application EP1045551 describes a method for data transmission wherein a data source adapts the data transmission rate in relation to how quickly acknowledgement messages are returned.

3rd Generation Partnership Project (3GPP): Technical Specification Group Radio Access Network, Radio Interface Protocol Architecture, 3GPPTS 25.301 v3. 6. 0, France, September 2000, describes an overall protocol structure of a Universal Mobile Telecommunications System (UMTS). There are three protocol layers:
- physical layer, layer 1 or LI,
- data link layer, layer 2 or L2, and
- network layer, layer 3 or L3.

Layer 2, L2, and layer 3, L3 are divided into Control and User Planes. Layer 2 consists of two sub-layers, RLC and MAC, for the Control Plane and four sub-layers, BMC, PDCP, RLC and MAC, for the User Plane. The acronyms BMC, PDCP, RLC and MAC denote Broadcast/Multicast Control, Packet Data Convergence Protocol, Radio Link Control and Medium Access Control respectively.

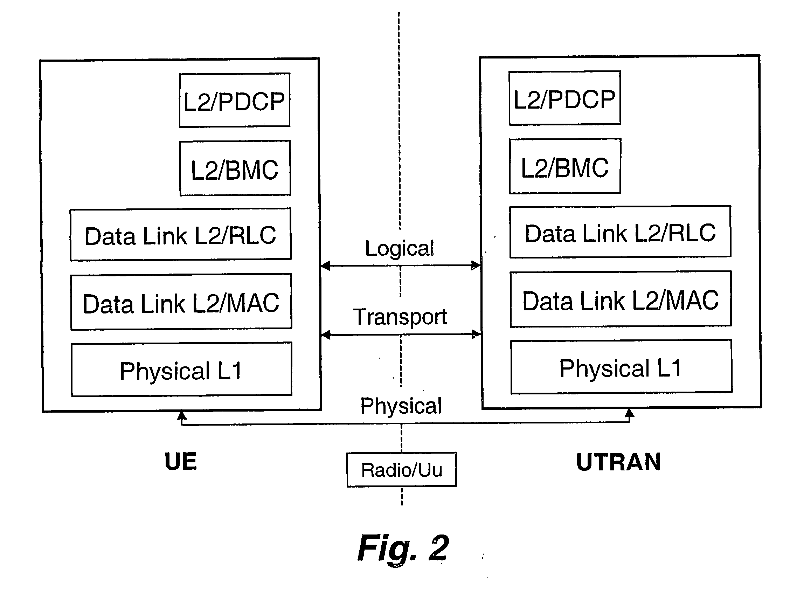

Figure 2 displays a simplified UMTS layers 1 and 2 protocol structure for a Uu Stratum, UuS, or Radio Stratum, between a user equipment UE and a Universal Terrestrial Radio Ac- cess Network, UTRAN.

Radio Access Bearers, RABs, are associated with the application for transportation of services between core network, CN, and user equipment, UE, through a radio access network.

Each RAB is associated with quality attributes such as service class, guaranteed bit rate, transfer delay, residual BER, and traffic handling priority. An RAB may be as- signed one or more Radio Bearers, RBs, being responsible for the transportation between UTRAN and UE. For each mobile station there may be one or several RBs representing a radio link comprising one or more channels between UE and UTRAN. Data flows (in the form of segments) of the RBs are passed to respective Radio Link Control, RLC, entities which amongst other tasks buffer the received data segments. There is one RLC entity for each RB. In the RLC layer, RBs are mapped onto respective logical channels. A Medium Access Control, MAC, entity receives data transmitted in the logical channels and further maps logical channels onto a set of transport channels. In accordance with subsection 5.3.1.2 of the 3GPP technical specification MAC should support service multiplexing e.g. for RLC services to be mapped on the same transport channel. In this case identification of multiplexing is contained in the MAC protocol control information.

Transport channels are finally mapped to a single physical channel which has a total bandwidth allocated to it by the network. In frequency division duplex mode, a physical channel is defined by code, frequency and, in the uplink, relative phase (I/Q). In time division duplex mode a physical channel is defined by code, frequency, and timeslot. As further described in subsection 5.2.2 of the 3GPP technical specification the L1 layer is responsible for error detection on transport channels and indication to higher layer, FEC encoding/decoding and interleaving/deinterleaving of transport channels.

PDCP provides mapping between Network PDUs (Protocol Data Units) of a network protocol, e.g. the Internet protocol, to an RLC entity. PDCP compresses and decompresses redundant Network PDU control information (header compression and decompression).

3^{rd} Generation Partnership Project (3GPP): Technical Specification Group Radio Access Network, RLC Protocol Specification, 3GPP TS 25.322 v3.5.0, France, December 2000*,* specifies the RLC protocol. The RLC layer provides three services to higher layers:
- transparent data transfer service,
- unacknowledged data transfer service, and
- acknowledged data transfer service.

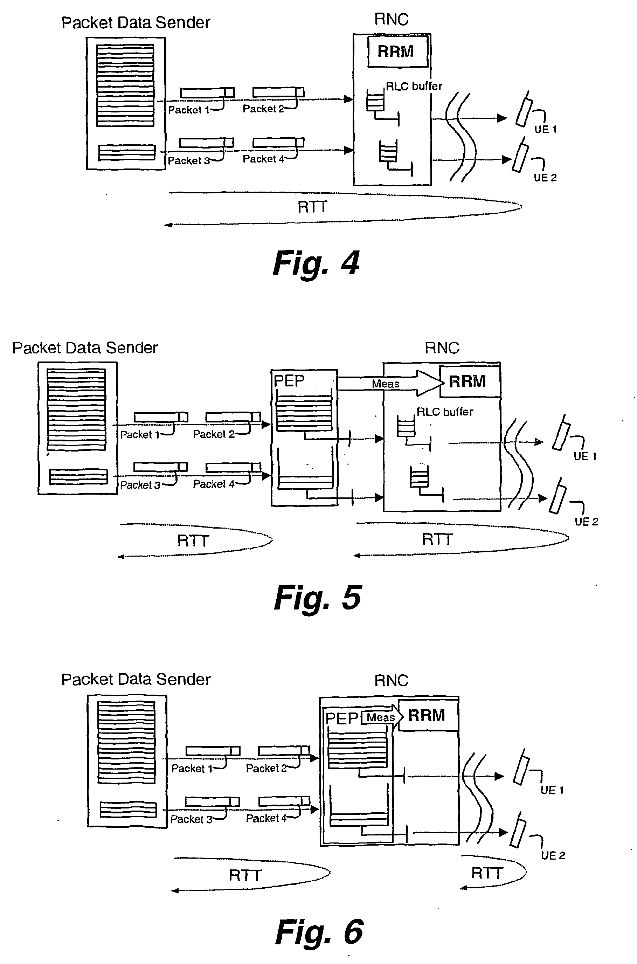

In subsection 4.2.1.3 an acknowledged mode entity, AM-entity, is described (see figure 4.4 of the 3GPP Technical Specification). In acknowledged mode automatic repeat request, ARQ, is used. The RLC sub-layer provides ARQ functionality closely coupled with the radio transmission technique used.

3^{rd} Generation Partnership Project (3GPP): Technical Specification Group Radio Access Network, Architectural Requirements for Release 1999, 3GPP TS 23.121 v3.5.1, France, December 2000*,* specifies adopted solutions for data retrieve at GPRS-UMTS handover and data retrieve in UMTS.

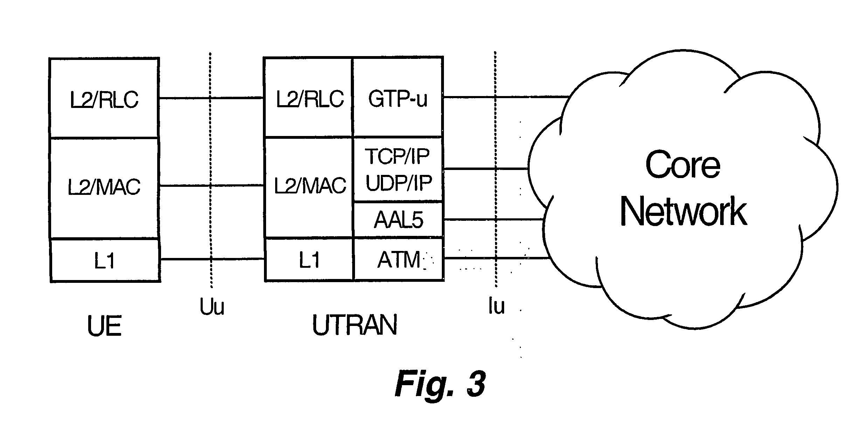

Figure 3 shows protocol architecture for IP domain user plane. The radio interface, Uu, and L1, L2/RLC and L2/MAC protocol layers of UE and UTRAN have been described in relation to figure 2. UTRAN communicates over an Iu interface with a Core Network. TCP/IP, UDP/IP, AAL5 and ATM are protocols or protocol layers well known to a person skilled in the art. TCP/IP or UDP/IP transfers data depending on network type and/or application. Multimedia C-plane and U-plane are run transparently over a PDP-context between the UE and multimedia gatekeeper and gateway in Core Network. A GPRS Tunneling Protocol, GTP, runs on top of TCP/IP or UDP/IP. GTP-u stands for GTP User Plane Protocol. The User Plane in a UMTS network is made up of two logical connections or tunnels, a first tunnel on the Iu interface, between RNC and SGSN (Serving GPRS Support Node), and a second tunnel on a Gn interface, between SGSN and GGSN (Gateway GPRS Support Node), not illustrated in figure 3. Data packets are transferred through the tunnels specifying (possibly dynamically assigned) an IP address for each user. GTP specifies a protocol for tunnel control and management. Signaling is used to create, modify or delete tunnels. ATM based protocols, «AAL5», «ATM» can be used below IP. As an alternative, Ethernet based protocols can be used.

Higher layer applications can be, e.g., applications on the Internet. Most applications on the Internet use protocols, such as TCP (Transmission Control Protocol), that control the transmission rate, based on link quality in terms of packet loss and delay characteristics. Consequently, besides the negative effect of retransmission delays as such on perceived quality, substantial queuing delay can also lead to secondary effects further reducing quality of service.

None of the cited documents above discloses a method and system of transmissions and retransmissions of packet data in systems using rate switching or channel switching allowing for compatible protocols for fixed and switched rates/channels, or provide an interface to channel resource management.

### SUMMARY OF THE INVENTION

In a system according to prior art buffering of data in a Radio Network Controller causes delay and round-trip time latency. I.e. the time for a user or user application to perceive a response to transmitted data or undertaken action from the receiving end is not immediate. Further buffering causes delay of (one-way) data destined for a user equipment. Protocols used for transmission, e.g. and by way of predominant example TCP (Transmission Control Protocol), use congestion algorithms that will utilize channel resources of a channel switching system inefficiently if not properly managing channel resources.

A prior art radio link control protocol, e.g., includes retransmission protocols that can cause protocols, such as TCP, at a higher application layer to behave as if the channel were congested, when the reasons is not congestion or channel overload, but a designed channel characteristic due to radio resource management.

For high-speed data transmissions over link protocols with relatively small buffer sizes, evaluation of the need for capacity of existing connections and allocation of capacity to new connections are difficult or impossible.

Consequently, it is an object of this invention to increase utilization of channel resources of a channel switching system.

It is also an object of this invention to eliminate or reduce delay and latency as perceived by a user.

A related object is to reduce delay and latency as perceived by a congestion control algorithm with applications such as Internet connections over a radio link in a WCDMA (Wideband Code Division Multiple Access) system.

A further object is to enable or simplify allocation and management of capacity to new and existing connections, including evaluation and prediction of capacity needs for various connections.

Finally, it is an object to integrate radio resource management of a channel switching radio communications system and a proxy server.

These objects are met by the invention, which is particularly well suited for a Universal Mobile Telecommunications System, UMTS, providing an interface between a proxy and channel resource management, particularly radio resource management.

Preferred embodiments of the invention, by way of examples, are described with reference to the accompanying drawings below.

### BRIEF DESCRIPTION OF THE DRAWINGS

Figure 1 shows communication between a UE and a base station involved in a connection between an RNC and the UE.
Figure 2 displays a layered protocol structure, according to prior art, in a radio communications system.
Figure 3 shows protocol architecture for IP domain user plane, according to prior art.
Figure 4 displays radio resource control, according to prior art.
Figure 5 displays a first embodiment for radio resource control, according to the invention.
Figure 6 displays a second embodiment for radio resource control, according to the invention.
Figure 7 shows a stand alone performance enhancing proxy, according to the invention.
Figure 8 illustrates a performance enhancing proxy integrated with RNC, according to the invention.
Figure 9 shows a block diagram with a stand alone performance enhancing proxy «PEP» connected to a User Equipment «UE», according to the invention.
Figure 10 illustrates an exemplary performance enhancing proxy «PEP» integrated with a User Equipment «UE», according to the invention.

### DESCRIPTION OF PREFERRED EMBODIMENTS

Figure 4 displays radio resource control, according to prior art. A «Packet Data Server», e.g. a Web Server corresponding to «Server Device» of figure 1, transmitting data packets to a User Equipment «UE», being client device, using a packet data protocol including congestion control, such as TCP.

Data packets «Packet 1», «Packet 2», «Packet 3», «Packet 4» are transmitted from the Packet Data Sender through a network to a Radio Network Controller. In accordance with UTRAN technical specifications, RNC includes an RLC protocol layer, as schematically illustrated in figure 2. «RNC» communicates with User Equipment «UE 1», «UE 2». The RNC comprises Radio Resource Management «RRM» undertaking Radio Resource Control, assigning and switching channel resources. According to prior art RRC relies on local traffic measurements in «RNC» and there are no means for distinguishing the different traffic or data dependent needs for channel resources of the different connections of the RNC. There is a sender-receiver relationship between «RNC» and «UE 1» and «UE 2», respectively. Packets transmitted from RLC protocol entity residing in RNC are acknowledged by User Equipment «UE 1», «UE 2». The sender-receiver relationship is subject to latency due to a round-trip delay between RNC and UE, not illustrated to simplify reading. Assuming that «UE 1» and «UE 2» are using an application making use of e.g. TCP, such as web browsing, the Packet Data Sender transmits TCP packets to be acknowledged by the respective client devices «UE 1», «UE 2». To avoid confusion, "application protocol acknowledgements" refer to acknowledgements associated with the L3 network layer and "RLC acknowledgements" refer to acknowledgements associated with the L2/RLC protocol layer. As the application protocol acknowledgements and the RLC acknowledgements are nested, the application protocol acknowledgments will perceive an increasing round-trip time delay as the RLC acknowledgements round-trip time increases.

A problem inherent in interconnected links, such as interconnection of a fixed wireline Internet communications link and a switched wireless communications link, is the different respective characteristics of the communication links, and the congestion control, such as that of TCP for Internet connections, of communications on the interconnected links. A major problem of TCP, when used over links of different characteristics, is the congestion control back-off, particularly when entering Slow Start state, due to the congestion control algorithm perceiving or misinterpreting a channel as being congested, when the perceived behavior is due to different link characteristics of various parts of an end-to-end connection. This is particularly the case, when interconnecting fixed wireline links and switched wireless links with great bandwidth-delay product. Such misinterpretation will cause an overall end-to-end link to underperform.

Of course, it is possible for a Packet Data Sender to use a transport protocol designed particularly for a channel switching communication system such as UMTS. However, it is a great advantage if the same application protocols at network layer, and advantageously even lower level protocols of the network layer, could be used for clients and servers irrespective of whether a user accesses the server over a fixed network connection or a channel switching communications system. This invention allows for use of compatible protocols in wireline and wireless systems, at least for an application layer in L3 network layer, and advantageously also for use of compatible lower level protocols, such as lower level protocols used on the Internet. Prior art, as referred to above, provide low performance or is restricted to usage of dedicated protocols for toll-quality performance. The invention provides a high-performance solution to the deficiencies of prior art, as described.

An aspect of the invention is that according to prior art RLC buffers risk to run out of data, even if there is data to transfer from a data provider to a user in e.g. UMTS. This will lead to radio resources being underutilized and users experiencing increased latencies and delays or even the connection to be broken. There is also a risk of the transfer from the data provider to stall.

In UMTS, existing RLC protocols operate with limited buffer sizes. One reason for this is delay constraints. According to prior art data throughput and buffer status measurements provide very limited information on the future bandwidth needs of a connection. Buffer fill level and data throughput measurements provide no means to distinguish whether the packets presently loading the link are the last few of a transfer, or if there remains a lot of data at the sender still to be transmitted. Consequently, evaluation of data-related need for capacity of existing connections and allocation of capacity to new connections are difficult or impossible. There is no information in RLC buffer on how large objects a client is retrieving from the Packet Data Sender, e.g. downloading, to estimate a user's near-future need, associated with the data he is retrieving, for channel capacity.

As a non-exclusive example illustrating a problem of prior art, RRM may perform a channel up-switch, allocating more channel capacity to a connection, at a moment when the last bits of a data transfer have been transmitted leading to waste of channel resource of no value to the user obtaining data bandwidth increase, reducing the data bandwidth available to other connections of a scarce shared channel resource.

The problem cannot be solved by increasing RLC buffer size, as long as the RLC buffer is part of an end-to-end-delay of a connection between a data provider and an end user, where the data provider awaits application protocol acknowledgements from the user, since increasing RLC buffer size would introduce additional delay and require extensive time-out limits.

Another problem in prior art is evaluation when there is a plurality of on-going connections. It is difficult or impossible for the channel resource management, such as RRM ('radio resource management') in UMTS, to evaluate which connection or connections of a plurality of active ones that is in need for more capacity or bandwidth.

A problem related to a transport protocol such as TCP and channel switching is that sudden buffer drainage in RLC buffer, or corresponding prior art buffer, or low throughput due to, e.g., TCP loss recovery or great variations in packet delays may trigger unwanted channel down-switch, if, e.g., channel resource management interprets data transmissions to have ended, notwithstanding a lot of data remain to be sent from the data provider. A straightforward solution to avoid channel down-switching is to have extensive prohibit time delays prohibiting channel down-switching during a predefined time frame beginning at the first instance of indication of a broken connection or a connection with less need for capacity. However, such a solution would be inefficient in a channel resource perspective, prohibiting other connections to access channel resources of truly broken connections during the prohibit time frame, leaving scarce channel resources underutilized.

The present invention provides a solution also to this problem. Interfacing the data provider and acknowledging correctly received packets in close relation to channel resource management, such as RRM in UMTS, enables the data provider to proceed data transmissions. This will prevent data transmissions from getting stalled due to RLC or corresponding buffer running out of data due to end-to-end-latency between data provider and end user, or reduce the risk thereof. As already mentioned, it will also allow for improved prediction of channel capacity to allocate. Consequently, prohibit time frames for channel down-switching can be reduced or eliminated, increasing utilization of scarce channel resources, such as radio channel resources.

The present invention provides for efficient channel switching and good radio resource utilization of particularly a UMTS system, but also applies to other systems using packet services such as GPRS, enabling reliable predictions of future bandwidth needs of connections close to radio resource management, generally located in RNC.

Figure 5 displays a first embodiment for radio resource control, according to the invention. The embodiment introduces a Performance Enhancing Proxy «PEP» between «Packet Data Sender» and Client Device/User Equipment «UE 1», «UE 2». «PEP» comprises buffers of sizes sufficiently large to store objects of data, in their entirety or in part, to be transmitted to the client. «PEP» further splits the application protocol connection between «Packet Data Sender» and client «UE 1», «UE 2» into two parts. One part being between «Packet Data Sender» and «PEP», the other being between the proxy «PEP» and user equipment «UE 1», «UE 2». Now only application protocol acknowledgements between «PEP» and «UE 1» or «UE 2» are nested with RLC acknowledgements; application protocol acknowledgement between «Packet Data Sender» and «PEP» are not. Thus congestion control of data provider «Packet Data Sender» and «PEP» will be unaffected of radio resource management considerations in «RNC». Sender-side and receiver-side window sizes *cwnd, rwnd,* and other parameters used for congestion control of e.g. TCP can be adjusted individually for each part of the TCP-connection and need not be identical. This is one reason for which capacity is increased according to the invention as compared to prior art. Another reason is that channel resources can be more heavily utilized, increasing their block error rates the block errors to be recovered by retransmissions, during heavy-traffic hours to increase system throughput.

According to the invention, a particular advantage is achieved by the introduction of a proxy «PEP» if its buffer size is optionally selected large enough to comprise typical sizes of entire data objects from «Packet Data Sender». The buffer content can then be made use of to predict the need for channel resources to transmit the data packets of the entire objects. However, also optionally partly stored objects provide information for prediction. Therefore, RRC based upon measurement data from «PEP» can be made more reliable than if RRC would need to rely on estimates based solely upon data in RLC buffers, according to prior art. Such prior art information comprises statistics on times in buffer, such as average time in buffer or buffering time for last transmitted packet, not related to the data objects.

A further advantage of introducing «PEP» is that the needs of individual users/clients can be predicted in contrast to prior art solution depicted in figure 4.

Figure 6 displays a second embodiment for radio resource control, according to the invention. The RLC protocol layer buffers data packets not yet acknowledged. Figures 4 and 5 are illustrated to comprise dedicated RLC buffers for this purpose. If PEP is integrated with «RNC» or the RLC entity, buffer space can be reduced by sharing buffer space between «PEP» and RLC entity.

The Transmission Control Protocol, used as an example in the explanations above, is sensitive to large channel bandwidth-delay products and non-negligible block error rates. In UMTS systems channel error rate is traded with delay. High physical error rates can be reduced by the use of ARQ between «RNC» and User Equipment «UE 1», «UE 2» at the cost of delay. Compared to, e.g., second generation (or earlier) mobile radio communications systems such as GSM and IS-95, WCDMA systems offer large bandwidths.

Channels can be switched for several reasons. One example of channel switching is handover from one base station to another as a user moves. Another reason can be some channels being subject to heavy interference whereas others are not. By use of different channelization codes in WCDMA, users are allocated channels of different data rates. Other wireless systems, such as W-LANs (Wireless Local Area Networks) generally do not provide for handover from one base station to another including channel switching even if they allow for quasi-stationary connections to different base stations of the systems.

As a user moves with his user equipment away from a base station «BS 1» towards another base station «BS 2» in figure 1, the connection between UE and RNC is likely to be rerouted from being over a first Node B «Node B 1» to being over a second Node B «Node B 2» or over both «Node B 1» and «Node B 2» using soft handover. In figure 1, the base stations are connected to the same radio network controller RNC. However, the invention also covers the exemplary situation where the base stations are connected to different RNCs. In UMTS, the RLC protocol is terminated in a serving RNC, SRNC, responsible for interconnecting the radio access network of UMTS to a core network.

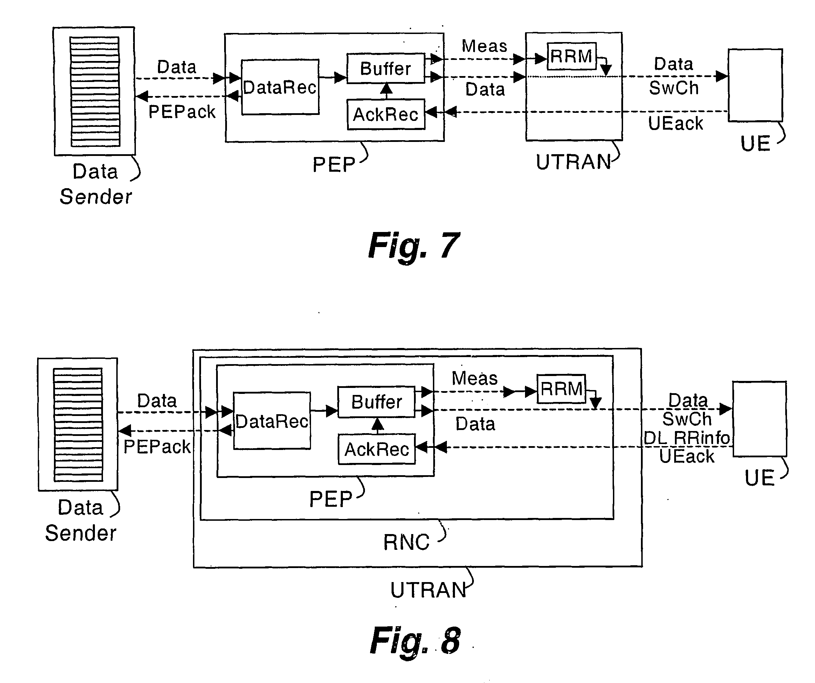

Figure 7 shows a block diagram with a stand alone performance enhancing proxy «PEP» connected to a universal terrestrial radio access network «UTRAN», according to the invention. A data sender «Data Sender» transmits data destined for a user of a user equipment «UE» in a communications system including an exemplary universal terrestrial radio access network «UTRAN» providing data for «UE» over a switched channel «SwCh». «UE» acknowledges received data «UEack», positively or negatively. Irrespectively of the UE application protocol acknowledgements or RLC protocol acknowledgements, the proxy «PEP» acknowledges data received from «Data Sender», positively or negatively. Data from «Data Sender» is received and acknowledged in a data receiver «DataRec» in «PEP». Received data is cached or stored in a data buffer «Buffer» in «PEP». The buffered data may be used for measurements or extraction of prediction data «Meas», for radio resource management «RRM» in UTRAN. Data is transferred from the data buffer «Buffer» of «PEP» to its destination «UE» on a switched channel as established by UTRAN. Acknowledgements «UEack» of transferred data from «UE» are received in block «AckRec» of «PEP». Upon acknowledgement «Buffer» is informed by «AckRec» that acknowledged data need not be stored any further for the acknowledging destination.

Figure 8 illustrates a performance enhancing proxy «PEP» according to the invention integrated with radio network controller «RNC», being part of «UTRAN» in an exemplary WCDMA system. Transmissions and devices are similar to those of figure 7, labeled correspondingly.

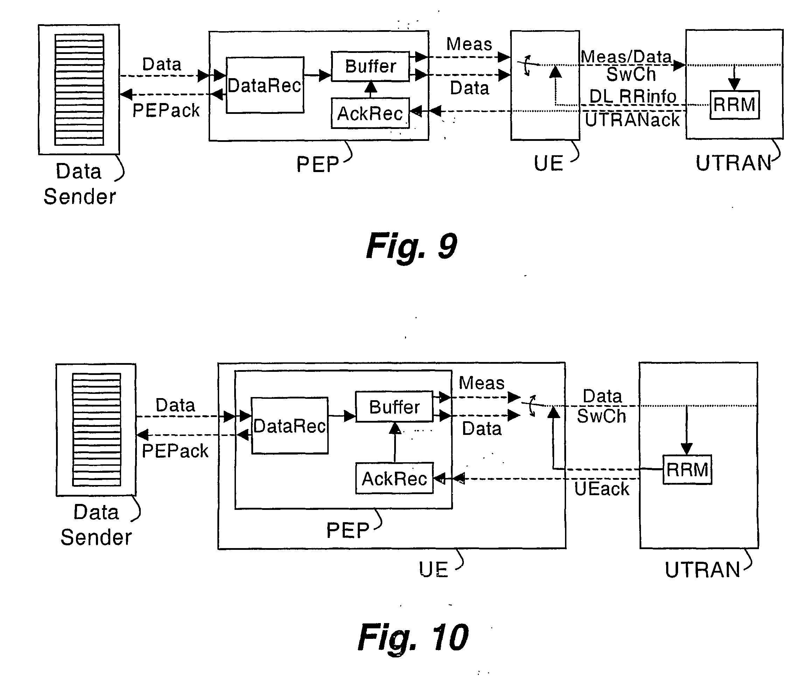

Figure 9 shows a block diagram with a stand alone performance enhancing proxy «PEP» connected to a User Equipment «UE» according to the invention. A data sender «Data Sender» transmits data destined for a Server Device (not included in the figure) in a network behind an exemplary universal terrestrial radio access network «UTRAN», see figures 1 and 3, over a switched channel «SwCh». «UTRAN» acknowledges received data «UTRANack», positively or negatively. Irrespectively of the UE acknowledgements, the proxy «PEP» acknowledges data received from «Data Sender», positively or negatively. Data from «Data Sender» is received and acknowledged in a data receiver «DataRec». Received data is cached or stored in a data buffer «Buffer» in «PEP». The buffered data may be used for measurements or extraction of prediction data «Meas», for radio resource management «RRM» in UTRAN. Prediction data is transferred from «UE» to «PEP» on a switched channel as established. This can be identically the same channel used for payload, as well as another channel. However, for reasons of simplicity, the transfer is indicated by a separate dashed line from «PEP» prior to channel selection and a single dashed line from «UE» to «UTRAN». Radio resource management data for rate and channel selection is transferred from «UTRAN» to «UE» on a downlink channel «DL RRinfo». For reasons of clarity this is indicated by a separate dashed line between «UTRAN» and «UE». However, this does not exclude that they can also be transmitted on identically the same channel. Data is transferred from the data buffer «Buffer» of «PEP» towards its destination on a switched channel «SwCh» as established by UTRAN. Acknowledgements «UTRANack» of data transferred between «UE» and

«UTRAN» are received in block «AckRec» of «PEP». Upon acknowledgement, «Buffer» is informed by «AckRec» that acknowledged data need not be stored any further for the acknowledging destination.

Figure 10 illustrates an exemplary performance enhancing proxy «PEP» according to the invention integrated with a User Equipment «UE», preferably a user equipment of a WCDMA system. Transmissions and devices are similar to those of figure 9, labeled correspondingly.

The performance enhancing proxy can be physically integrated with a GTP-u tunneling protocol with the additional benefit of having a ready mapping between the RLC instances and TCP connections.

Preferably, all retransmission entities, interconnecting networks or channels of different characteristics, e.g. RNCs in UMTS, operate according to the invention for outstanding performance. However, the invention can also be used in systems also including retransmission entities, such as RNCs, not operating according to the invention.

A person skilled in the art readily understands that the receiver and transmitter properties of a BS or a UE are general in nature. The use of concepts such as BS, UE or RNC within this patent application is not intended to limit the invention only to devices associated with these acronyms. It concerns all devices operating correspondingly, or being obvious to adapt thereto by a person skilled in the art, in relation to the invention. As an explicit non-exclusive example the invention relates to mobile stations without a subscriber identity module, SIM, as well as user equipment including one or more SIMs. Further, protocols and layers are referred to in close relation with UMTS and Internet terminology. However, this does not exclude applicability of the invention in other systems with other protocols and layers of similar functionality. As a non-exclusive example, the invention applies for radio resource management interfacing of a connection protocol application layer as well as interfacing of a connection protocol transport layer, such as TCP.

The invention is not intended to be limited only to the embodiments described in detail above. Changes and modifications may be made without departing from the invention. It covers all modifications within the scope of the following claims.

## Claims

1. A method of transmitting data from a data provider (Data Sender) to a user equipment (UE) in a communications system transmitting data over a channel, switching between rates or channels of different characteristics, a switched channel, wherein data is received from the data provider the method **characterized by** the steps of:
- positively or negatively acknowledging reception of received data towards the data provider prior to transmitting the data over said switched channel,
- caching or storing data from the data provider in a data buffer (Buffer) prior to transmitting it over the switched channel,
- predicting required channel resources of the switched channel based on the data in the data buffer, and
providing radio resource management (RRM) with prediction data.

2. The method according to claim 1, **characterized in that** data is cached or stored in association with radio resource management.

3. The method according to any of claims 1-2 **characterized in that** cached or stored data is kept in cache or storage until the transmission over the switched channel has been positively acknowledged, or that a time-out period for a negative acknowledgement has elapsed.

4. The method according to any of claims 1 - 3 **characterized in that** prediction is performed for a connection to be established.

5. The method according to any of claims 1 - 3 **characterized in that** prediction is performed for an established connection.

6. The method according to any of claims 1-5 **characterized in that** data is cached or stored in a performance enhancing proxy (PEP).

7. The method according to claim 6 **characterized in that** the performance enhancing proxy provides an interface to radio resource management.

8. The method according to claim 6 or 7 **characterized in that** the performance enhancing proxy is integrated with aGTP-u tunneling protocol entity.

9. The method according to any of claims 1-8 **characterized in that** data is cached or stored in a proxy server.

10. The method according to claim 9 **characterized in that** the proxy server provides an interface to radio resource management.

11. The method according to claim 9 or 10 **characterized in that** the proxy server is integrated with a GTP-u tunneling protocol entity.

12. The method according to any of claims 1-11 **characterized in that** the switched channel is terminated in a user equipment or a mobile station.

13. The method according to claim 12 **characterized in that** the switched channel is terminated in a user equipment or a mobile station of a WCDMA system or a Universal Mobile Telecommunications System.

14. The method according to claim 1-13 **characterized in that** data is cached or stored in a radio network controller or in a network element connected to a radio network controller.

15. The method according to any of claims 1-14 **characterized in that** the switched channel is terminated in a network element.

16. The method according to claim 14 or 15 **characterized in that** the network element is a network element of a radio access network.

17. The method according to any of claims 14-16 **characterized in that** the network element is a Node B, a base station or a radio network controller or is connected to a Node B, a base station or a radio network controller.

18. The method according to any of claims 14-17 **characterized in that** the network element is a net- work element of a WCDMA system or UMTS.

19. The method according to any of claims 1-18 **characterized in that** the communications system includes Internet communications.

20. An element for transmitting data from a data provider (Data Sender) to a user equipment (UE) in a communications system transmitting data over a channel, switching between rates or channels of different characteristics, a switched channel, the element comprising means for receiving data from the data provider, the element being **characterized by**:
- means for positively or negatively acknowledging reception of received data towards the data provider prior to transmitting the data over said switched channel,
- means for caching or storing data from the data provider in a data buffer (Buffer) prior to transmitting it over the switched channel,
- means for predicting required channel resources of the switched channel based on the data in the data buffer, and
- means for providing radio resource management (RRM) with prediction data.

21. The element according to claim 20 **characterized in that** the element is adapted to keep cached or stored data in cache or storage until the transmission of data over the switched channel has been positively acknowledged, or that a time-out period for a negative acknowledgement has elapsed.

22. The element according to any of claims 20- -21 **characterized in that** the prediction data concerns a connection to be established.

23. The element according to any of claims 20 - 22 **charac-terized in** that the prediction data concerns an established connection.

24. The element according to any of claims 20-23 **characterized in that** the element is a performance enhancing proxy (PEP).

25. The element according to any of claims 20-24 **characterized in that** the element is a proxy server.

26. The element according to any of claims 20-25 **characterized in that** the element provides an interface to radio resource management.

27. The element according to any of claims 20 - 26 **characterized in that** the prediction data concerns a connection to a user equipment.

28. The element according to claim 27 **characterized in that** the prediction data concerns a connection to a user equipment of a WCDMA system or a Universal Mobile Telecommunications System.

29. The element according to any of claims 20-28 **characterized in that** the element is a radio network controller or is connected to a radio network controller.

30. The element according to any of claims 20-29 **characterized in that** the element is integrated with a GTP-u tunneling protocol entity.

31. The element according to any of claims 20 -30 **characterized in that** the prediction data concerns a connection to a radio access network.

32. The element according to claim 31 **characterized in that** the radio access network is a universal terrestrial radio access network of a WCDMA system or a Universal Mobile Telecommunications System.

## Patentansprüche

1. Verfahren zum Übertragen von Daten von einem Datenprovider (Data Sender) an ein Nutzergerät (UE) in einem Kommunikationssystem, das Daten über einen Kanal überträgt, zwischen Raten oder Kanälen verschiedener Charakteristiken umschaltet, ein geschalteter Kanal, worin Daten vom Datenprovider empfangen werden, wobei das Verfahren folgende Schritte umfasst:
- positive oder negative Rückmeldung des Empfangs von empfangenen Daten an den Datenprovider, bevor die Daten über den geschalteten Kanal übertragen werden,
- Cachen oder Speichern von Daten vom Datenprovider in einen Datenpuffer (Buffer), bevor sie über den geschalteten Kanal übertragen werden,
- Vorhersagen von erforderlichen Kanalressourcen des geschalteten Kanals auf der Basis der Daten im Datenpuffer, und
die Funkressourcenverwaltung (RRM) mit Vorhersagedaten versorgen.

2. Verfahren nach Anspruch 1, **dadurch gekennzeichnet, dass** die Daten, mit Funkressourcenmanagement assoziiert, gecacht oder gespeichert werden.

3. Verfahren nach einem der Ansprüche 1-2, **dadurch gekennzeichnet, dass** die gecachten oder gespeicherten Daten im Cache oder Speicher gehalten werden, bis die Übertragung über den geschalteten Kanal positiv rückgemeldet wurde oder bis eine Timeoutperiode für eine negative Rückmeldung abgelaufen ist.

4. Verfahren nach einem der Ansprüche 1-3, **dadurch gekennzeichnet, dass** eine Vorhersage für eine aufzubauende Verbindung gemacht wird.

5. Verfahren nach einem der Ansprüche 1-3, **dadurch gekennzeichnet, dass** eine Vorhersage für eine aufgebaute Verbindung gemacht wird.

6. Verfahren nach einem der Ansprüche 1-5, **dadurch gekennzeichnet, dass** Daten in einem performancesteigernden Proxy (PEP) gecacht oder gespeichert werden.

7. Verfahren nach Anspruch 6, **dadurch gekennzeichnet, dass** der performancesteigernde Proxy eine Schnittstelle zur Funkressourcenverwaltung bereitstellt.

8. Verfahren nach Anspruch 6 oder 7, **dadurch gekennzeichnet, dass** der performancesteigernde Proxy mit einer GTP-u Tunnelprotokollinstanz integriert ist.

9. Verfahren nach einem der Ansprüche 1-8, **dadurch gekennzeichnet, dass** Daten in einem Proxyserver gecacht oder gespeichert werden.

10. Verfahren nach Anspruch 9, **dadurch gekennzeichnet, dass** der Proxyserver eine Schnittstelle zur Funkressourcenverwaltung bereitstellt.

11. Verfahren nach Anspruch 9 oder 10, **dadurch gekennzeichnet, dass** der Proxyserver mit einer GTP-u Tunnelprotokollinstanz integriert ist.

12. Verfahren nach einem der Ansprüche 1-1, **dadurch gekennzeichnet, dass** der geschaltete Kanal in einem Nutzergerät oder einer Mobilstation abgeschlossen wird.

13. Verfahren nach Anspruch 12, **dadurch gekennzeichnet, dass** der geschaltete Kanal in einem Nutzergerät oder einer Mobilstation eines WCDMA-Systems oder eines UMTS (Universal Mobile Telecommunications System) abgeschlossen wird.

14. Verfahren nach einem der Ansprüche 1-13, **dadurch gekennzeichnet, dass** Daten in einer Funknetzsteuerung oder in einem Netzelement gecacht oder gespeichert werden, das an eine Funknetzsteuerung angeschlossen ist.

15. Verfahren nach einem der Ansprüche 1-14, **dadurch gekennzeichnet, dass** der geschaltete Kanal in einem Netzelement abgeschlossen wird.

16. Verfahren nach Anspruch 14 oder 15, **dadurch gekennzeichnet, dass** das Netzelement ein Netzelement eines Funkzugangsnetzes ist.

17. Verfahren nach einem der Ansprüche 14-16, **dadurch gekennzeichnet, dass** das Netzelement ein Node B, eine Basisstation oder eine Funknetzsteuerung ist, oder an einen Node B, eine Basisstation oder eine Funknetzsteuerung angeschlossen ist.

18. Verfahren nach einem der Ansprüche 14-17, **dadurch gekennzeichnet, dass** das Netzelement ein Netzelement eines WCDMA-Systems oder eines UMTS ist.

19. Verfahren nach einem der Ansprüche 1-18, **dadurch gekennzeichnet, dass** das Kommunikationssystem Internetkommunikationen umfasst.

20. Element zum Übertragen von Daten von einem Datenprovider (Data Sender) an ein Nutzergerät (UE) in einem Kommunikationssystem, das Daten über einen Kanal überträgt, zwischen Raten oder Kanälen verschiedener Charakteristiken umschaltet, ein geschalteter Kanal, wobei das Element ein Mittel umfasst, um Daten vom Datenprovider zu empfangen, und das Element **gekennzeichnet ist durch**:
- ein Mittel zur positiven oder negativen Rückmeldung des Empfangs von empfangenen Daten an den Datenprovider, bevor die Daten über den geschalteten Kanal übertragen werden,
- ein Mittel zum Cachen oder Speichern von Daten vom Datenprovider in einen Datenpuffer (Buffer), bevor sie über den geschalteten Kanal übertragen werden,
- ein Mittel zum Vorhersagen von erforderlichen Kanalressourcen des geschalteten Kanals auf der Basis der Daten im Datenpuffer, und
- ein Mittel, um die Funkressourcenverwaltung (RRM) mit Vorhersagedaten zu versorgen.

21. Element nach Anspruch 20, **dadurch gekennzeichnet, dass** das Element dazu angepasst ist, gecachte oder gespeicherte Daten im Cache oder Speicher zu halten, bis die Übertragung von Daten über den geschalteten Kanal positiv rückgemeldet wurde oder bis eine Timeoutperiode für eine negative Rückmeldung abgelaufen ist.

22. Element nach einem der Ansprüche 20-21, **dadurch gekennzeichnet, dass** die Vorhersagedaten eine aufzubauende Verbindung betreffen.

23. Element nach einem der Ansprüche 20-22, **dadurch gekennzeichnet, dass** die Vorhersagedaten eine aufgebaute Verbindung betreffen.

24. Element nach einem der Ansprüche 20-23, **dadurch gekennzeichnet, dass** das Element ein performancesteigernder Proxy (PEP) ist.

25. Element nach einem der Ansprüche 20-24, **dadurch gekennzeichnet, dass** das Element ein Proxyserver ist.

26. Element nach einem der Ansprüche 20-25, **dadurch gekennzeichnet, dass** das Element eine Schnittstelle zur Funkressourcenverwaltung bereitstellt.

27. Element nach einem der Ansprüche 20-26, **dadurch gekennzeichnet, dass** die Vorhersagedaten eine Verbindung zu einem Nutzergerät betreffen.

28. Element nach Anspruch 27, **dadurch gekennzeichnet, dass** die Vorhersagedaten eine Verbindung zu einem Nutzergerät eines WCDMA-Systems oder eines UMTS (Universal Mobile Telecommunications System) betrifft.

29. Element nach einem der Ansprüche 20-28, **dadurch gekennzeichnet, dass** das Element eine Funknetzsteuerung ist oder an eine Funknetzsteuerung angeschlossen ist.

30. Element nach einem der Ansprüche 20-29, **dadurch gekennzeichnet, dass** das Element mit einer GTP-u Tunnelprotokollinstanz integriert ist.

31. Element nach einem der Ansprüche 20-30, **dadurch gekennzeichnet, dass** die Vorhersagedaten eine Verbindung zu einem Funkzugangsnetz betreffen.

32. Element nach Anspruch 31, **dadurch gekennzeichnet, dass** das Funkzugangsnetz ein UTRAN (Universal Terrestrial Radio Access Network) eines WCDMA-Systems oder eines UMTS (Universal Mobile Telecommunications System) ist.

## Revendications

1. Procédé destiné à transmettre des données provenant d'un fournisseur de données (expéditeur de données) à un équipement utilisateur (UE), dans un système de communication transmettant des données sur un canal, en commutant entre des débits ou des canaux de caractéristiques distinctes, sur un canal commuté, dans lequel les données sont reçues à partir d'un fournisseur de données, le procédé étant **caractérisé en ce qu'**il comporte les étapes ci-dessous consistant à:
- accuser réception, positivement ou négativement, pour des données reçues au niveau du fournisseur de données avant de transmettre les données sur ledit canal commuté;
- mettre en mémoire cache ou stocker les données en provenance du fournisseur de données dans une mémoire tampon de données (tampon) avant de les transmettre sur le canal commuté;
- prévoir des ressources de canal requises du canal commuté sur la base des données stockées dans la mémoire tampon de données; et
- délivrer, à un module de gestion de ressources radio (RRM), des données prévisionnelles.

2. Procédé selon la revendication 1, **caractérisé en ce que** les données sont mises en mémoire cache ou stockées conjointement au module de gestion des ressources radio.

3. Procédé selon l'une quelconque des revendications 1 à 2, **caractérisé en ce que** les données mises en mémoire cache ou stockées sont conservées dans une mémoire cache ou de stockage jusqu'à ce que la transmission sur le canal commuté ait été positivement confirmée, ou qu'une période de temporisation pour un accusé de non réception se soit écoulée.

4. Procédé selon l'une quelconque des revendications 1 à 3, **caractérisé en ce qu'**une prévision est mise en oeuvre pour une connexion à établir.

5. Procédé selon l'une quelconque des revendications 1 à 3, **caractérisé en ce qu'**une prévision est mise en oeuvre pour une connexion établie.

6. Procédé selon l'une quelconque des revendications 1 à 5, **caractérisé en ce que** les données sont mises en mémoire cache ou stockées dans un serveur mandataire d'optimisation des performances (PEP).

7. Procédé selon la revendication 6, **caractérisé en ce que** le serveur mandataire d'optimisation des performances fournit une interface au module de gestion de ressources radio.

8. Procédé selon la revendication 6 ou 7, **caractérisé en ce que** le serveur mandataire d'optimisation des performances est intégré à une entité de protocole de mise sous tunnel GTP-u.

9. Procédé selon l'une quelconque des revendications 1 à 8, **caractérisé en ce que** les données sont mises en mémoire cache ou stockées dans un serveur mandataire.

10. Procédé selon la revendication 9, **caractérisé en ce que** le serveur mandataire fournit une interface au module de gestion de ressources radio.

11. Procédé selon la revendication 9 ou 10, **caractérisé en ce que** le serveur mandataire est intégré à une entité de protocole de mise sous tunnel GTP-u.

12. Procédé selon l'une quelconque des revendications 1 à 11, **caractérisé en ce que** le canal commuté prend fin dans un équipement utilisateur ou une station mobile.

13. Procédé selon la revendication 12, **caractérisé en ce que** le canal commuté prend fin dans un équipement utilisateur ou une station mobile d'un système d'accès WCDMA ou d'un système universel de télécommunication avec les mobiles.

14. Procédé selon la revendication 1 à 13, **caractérisé en ce que** les données sont mises en mémoire cache ou stockées dans un contrôleur de réseau radio ou dans un élément de réseau connecté à un contrôleur de réseau radio.

15. Procédé selon l'une quelconque des revendications 1 à 14, **caractérisé en ce que** le canal commuté prend fin dans un élément de réseau.

16. Procédé selon la revendication 14 ou 15, **caractérisé en ce que** l'élément de réseau est un élément de réseau d'un réseau d'accès radio.

17. Procédé selon l'une quelconque des revendications 14 à 16, **caractérisé en ce que** l'élément de réseau est un noeud B, une station de base ou un contrôleur de réseau radio ou est connecté à un noeud B, une station de base ou un contrôleur de réseau radio.

18. Procédé selon l'une quelconque des revendications 14 à 17, **caractérisé en ce que** l'élément de réseau est un élément de réseau d'un système d'accès WCDMA ou d'un système UMTS.

19. Procédé selon l'une quelconque des revendications 1 à 18, **caractérisé en ce que** le système de communication inclut des communications Internet.

20. Élément destiné à transmettre des données en provenance d'un fournisseur de données (expéditeur de données) à un équipement utilisateur (UE), dans un système de communication transmettant des données sur un canal, en commutant entre des débits ou des canaux de caractéristiques distinctes, sur un canal commuté, l'élément comportant un moyen pour recevoir des données en provenance du fournisseur de données, l'élément étant **caractérisé par**:
- un moyen pour accuser réception, positivement ou négativement, pour des données reçues au niveau du fournisseur de données avant de transmettre les données sur ledit canal commuté;
- un moyen pour mettre en mémoire cache ou stocker les données en provenance du fournisseur de données dans une mémoire tampon de données (tampon) avant de les transmettre sur le canal commuté;
- un moyen pour prévoir des ressources de canal requises du canal commuté sur la base des données stockées dans la mémoire tampon de données; et
- un moyen pour délivrer, à un module de gestion de ressources radio (RRM), des données prévisionnelles.

21. Élément selon la revendication 20, **caractérisé en ce que** l'élément est apte à conserver les données mises en mémoire cache ou stockées dans une mémoire cache ou de stockage jusqu'à ce que la transmission de données sur le canal commuté ait été positivement confirmée, ou qu'une période de temporisation d'un accusé de non réception se soit écoulée.

22. Élément selon l'une quelconque des revendications 20 à 21, **caractérisé en ce que** les données prévisionnelles concernent une connexion à établir.

23. Élément selon l'une quelconque des revendications 20 à 22, **caractérisé en ce que** les données prévisionnelles concernent une connexion établie.

24. Élément selon l'une quelconque des revendications 20 à 23, **caractérisé en ce que** l'élément est un serveur mandataire d'optimisation des performances (PEP).

25. Élément selon l'une quelconque des revendications 20 à 24, **caractérisé en ce que** l'élément est un serveur mandataire.

26. Élément selon l'une quelconque des revendications 20 à 25, **caractérisé en ce que** l'élément fournit une interface au module de gestion de ressources radio.

27. Élément selon l'une quelconque des revendications 20 à 26, **caractérisé en ce que** les données prévisionnelles concernent une connexion à un équipement utilisateur.

28. Élément selon la revendication 27, **caractérisé en ce que** les données prévisionnelles concernent une connexion à un équipement utilisateur d'un système d'accès WCDMA ou d'un système universel de télécommunication avec les mobiles.

29. Élément selon l'une quelconque des revendications 20 à 28, **caractérisé en ce que** l'élément est un contrôleur de réseau radio ou est connecté à un contrôleur de réseau radio.

30. Élément selon l'une quelconque des revendications 20 à 29, **caractérisé en ce que** l'élément est intégré à une entité de protocole de mise sous tunnel GTP-u.

31. Élément selon l'une quelconque des revendications 20 à 30, **caractérisé en ce que** les données prévisionnelles concernent une connexion à un réseau d'accès radio.

32. Élément selon la revendication 31, **caractérisé en ce que** le réseau d'accès radio est un réseau d'accès radio universel terrestre d'un système d'accès WCDMA ou d'un système universel de télécommunication avec les mobiles.
